# EUROPEAN PATENT SPECIFICATION

(11) **EP 3 822 469 B1**
(45) Date of publication and mention of the grant of the patent: **04.01.2023**
(21) Application number: 19209838.2
(22) Date of filing: 18.11.2019
(51) Int. Cl.: F02C 7/228, F02C 9/34, F23R 3/34

(54) **GAS TURBINE ENGINE WITH ALTERNATING PATTERNS OF ACTIVE BURNERS AND METHOD OF CONTROLLING A GAS TURBINE ENGINE**
GASTURBINENTRIEBWERK MIT WECHSELNDEN MUSTERN VON AKTIVEN BRENNERN UND VERFAHREN ZUR STEUERUNG EINES GASTURBINENTRIEBWERKS
TURBINE À GAZ AVEC DES SÉQUENCES ALTERNÉES DE BRÛLEURS ACTIFS ET PROCÉDÉ DE COMMANDE D'UNE TURBINE À GAZ

(43) Date of publication of application: 19.05.2021
(73) Proprietor: Ansaldo Energia Switzerland AG, 5400 Baden (CH)
(72) Inventor: JAKOBY, Ralf, 5400 BADEN (CH); KELLERER, Rudolf, 5400 BADEN (CH); APPEL, Christoph, 5400 BADEN (CH); RINN, Joerg, 5400 BADEN (CH); STUDERUS, Adrien, 5400 BADEN (CH)
(74) Representative: Bernotti, Andrea

(56) References cited:
- EP-A1- 2 857 658
- EP-A1- 3 421 761
- US-A1- 2011 289 899

## Description

### TECHNICAL FIELD

The present invention relates to a gas turbine engine with alternating patterns of active burners and to a method of controlling a gas turbine engine.

### BACKGROUND

As it is known, control of pollutant emissions is an objective of primary importance in design of any type of thermal machine and, in particular, of gas turbines for power plants. In fact, awareness of environmental risks drives towards regulations that set increasingly strict requirements. On the other hand, the organization of modern power market and the continuously variable demand do not allow to operate plants at constant load conditions. Instead, the need to meet demand fluctuations, including sudden rise or drop, and to contribute to control of grid frequency require quite flexible operation. The reduction of pollutant emissions, however, is made critical by such a flexible operation.

One of the problems to be addressed, for example, relates to operation at very low partial load. A switch-off sequence of burners is implemented to arrive at a part load pattern of burners which remain active in low load range. However, reducing the number of active burners in a combustor assembly may not be sufficient to meet both market and low emission requirements and active burners are often exploited in the lowest part of their power range. CO emissions are not normally an issue at full load, but low temperature and instability at low load may prevent the complete oxidation of the carbon and favour the formation of carbon monoxide, thus limiting the capabilities of gas turbine engines to operate with very low power output. A method to (partially) overcome this limitation is the deactivation of individual burners at low engine loads. Thus, the remaining active burners can operate at higher temperature levels, which keeps the amount of carbon oxide formation low.

Another limitation of known gas turbine engines resides in that, thermal stress remains severe and lifetime of components that always remain within the zone of the active burners is significantly shortened compared to other components in the cold areas. As a result, the maintenance cycles of the engines are affected by ageing of some components and relatively frequent maintenance is required.

Prior art gas turbine engine control systems are disclosed in documents EP2857658A1, US2011/289899A1 and EP3421761A1.

### SUMMARY OF THE INVENTION

It is an aim of the present invention to provide a gas turbine engine and a method of controlling a gas turbine engine, which allow to overcome or to attenuate at least in part the limitations described.

According to the present invention, there is provided a gas turbine engine, comprising:
a combustor assembly, having a plurality of burners circumferentially arranged about an axis;
a fuel supply system, configured to supply a fuel flowrate to the burners;
a controller, configured to control the fuel flowrate;
wherein the controller is further configured to activate and deactivate each burner so that:
an equal number of adjacent burners is maintained active in a first partial load condition and in a second partial load condition; and
at least one of the burners which are active in the first partial load condition is deactivated in the second partial load condition and at least one of the burners which are inactive in the first partial load condition is activated in the second partial load condition.

According to further aspect of the invention, there is provided a method of controlling a gas turbine engine comprising a combustor assembly, having a plurality of burners circumferentially arranged about an axis, the method comprising:
maintaining active an equal number of adjacent burners in a first partial load condition and in a second partial load condition; and
in the second partial load condition, deactivating at least one of the burners which are active in the first partial load condition and activating at least one of the burners which are inactive in the first partial load condition.

### BRIEF DESCRIPTION OF THE DRAWINGS

The present invention will now be described with reference to the accompanying drawings, which show some non-limitative embodiment thereof, in which:
- figure 1 is a simplified block diagram of a gas turbine engine;
- figure 2 is a schematic view of a combustor assembly and a portion of a fuel supply system incorporated in the gas turbine engine of figure 1 and made in accordance with one embodiment of the present invention;
- figure 3A is a graph showing quantities used in the gas turbine engine of figure 1 in an operating mode;
- figure 3B is a graph showing quantities used in the gas turbine engine of figure 1 in another operating mode;
- figures 4-16 show the combustor assembly of figure 1 in respective different operating conditions;
- figure 17 is a schematic view of a combustor assembly and a portion of a fuel supply system incorporated in a gas turbine engine in accordance with another embodiment of the present invention;
- figure 18 is a schematic view of a combustor assembly and a portion of a fuel supply system incorporated in a gas turbine engine in accordance with a further embodiment of the present invention; and
- figures 19-20 show the combustor assembly of figure 1 in respective further different operating conditions.

### DETAILED DESCRIPTION OF EXEMPLARY EMBODIMENTS

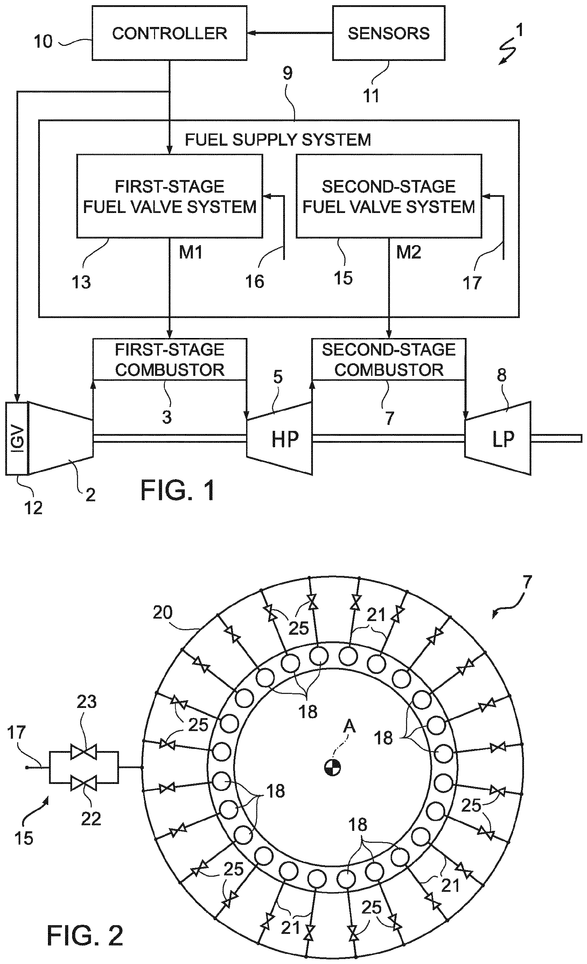

Figure 1 shows a simplified view of a gas turbine engine, designated as whole with numeral 1. The gas turbine engine 1 comprises a compressor 2, a first-stage combustor 3, a high-pressure turbine 5, a second-stage combustor 7 (also referred to as sequential combustor) and a low-pressure turbine 8.

A fuel supply system 9 delivers fuel flowrates for operation of the first-stage combustor 3 and the second-stage combustor 7.

A controller 10 receives state signals from system sensors 11 and operates the gas turbine through actuators to provide a controlled power output. The actuators include orientable inlet guide vanes 12 of the compressor 2 and a first-stage fuel valve system 13 and a second-stage fuel valve system 15 of the fuel supply system 9.

A flow of compressed air supplied by the compressor 2 is added with a first fuel flowrate M1 and the air/fuel mixture thus obtained is burnt in the first-stage combustor 3. The exhaust gas of the first-stage combustor 3 is expanded in the high-pressure turbine 5, then, after possibly adding a flow of diluting air, a second fuel flowrate M2 is mixed and burnt in the second-stage combustor 7. The exhaust gas is finally expanded in the low-pressure turbine 8 and discharged either to the outside or e.g. to a heat recovery steam generator. The first fuel flowrate M1 and the second fuel flowrate M2 from supply lines 16, 17 are controlled by the controller 10 using the first-stage fuel valve system 13 and the second-stage fuel valve system 15, respectively.

Figure 2 schematically shows the second-stage fuel valve system 15 and the second-stage combustor 7, which comprises a plurality of burners 18 circumferentially arranged about a machine axis A.

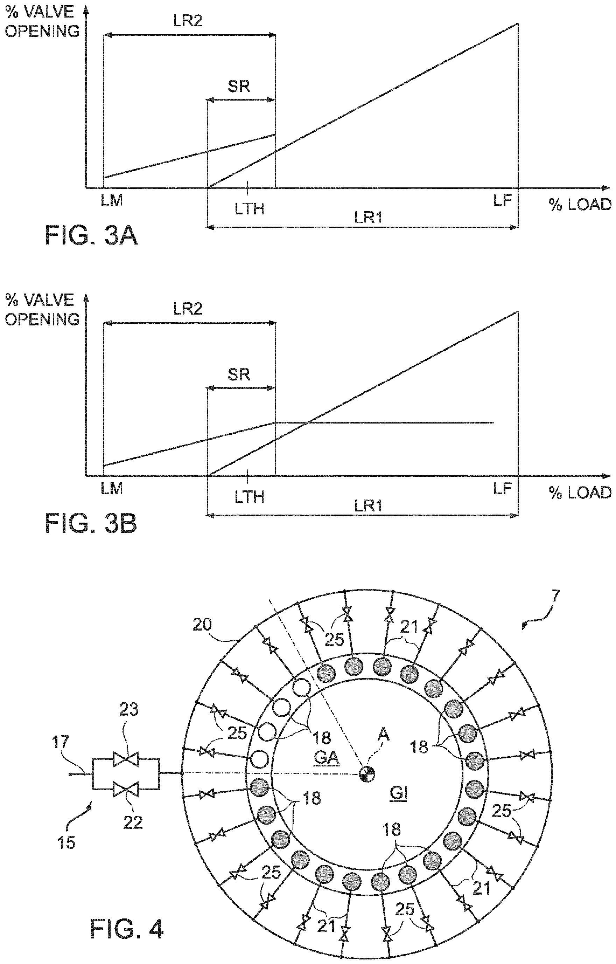

Fuel is supplied to the burners 18 through the supply line 17, the second-stage fuel valve system 15, a fuel plenum 20 and respective supply ducts 21. More precisely, the second-stage fuel valve system 15 comprises a main fuel valve 22 and an auxiliary fuel valve 23, both controlled by the controller 10 and having respective inlets connected to the supply line 17 and respective outlets connected to the fuel plenum 20. Thus, in the embodiment of figure 2 the main fuel valve 22 and the auxiliary fuel valve 23 are arranged in parallel. The main fuel valve 22 is sized to be operated with fuel flowrates corresponding to load in a first load range LR1 that includes full load LF down and a threshold partial load LTH (see figures 3A and 3B). The auxiliary fuel valve 23 is sized to be operated with fuel flowrates corresponding to load in a second load range LR2 that includes the threshold partial load LTH down and a minimum load LM. For example, the main fuel valve 22 has a first minimum rated flowrate and the auxiliary fuel valve 23 has a second minimum rated flowrate lower than the first minimum rated flowrate.

The supply ducts 21 extend from the fuel plenum 20 and inlets of respective burners 18.

Shut-off valves 25 are arranged along the supply ducts 21, a respective one for each burner 18. Thus, the shut-off valves 25 are arranged between the main fuel valve 22 and fuel inlets of the respective burners 18. The shut-off valves 25 are independently controlled by the controller 10, so that the controller 10 may activate and deactivate each burner 18 independently of the other burners 18.

The controller 10 is configured to control fuel flowrates fed to the burners 18 using the main fuel valve 22 and/or the auxiliary fuel valve 23 depending on the current load setpoint for the gas turbine engine 1. For load setpoints in the first load range LR1, from full load down to the threshold partial load LTH, the controller 10 adjusts the main fuel valve 22, whereas the auxiliary control valve 23 is not involved in flowrate control and may be kept closed (figure 3A) or completely open (figure 3B) or in any case partially open in a fixed configuration. Outside of the second load range LR2, the auxiliary fuel valve 23 may be kept open, thus providing a constant contribution to the overall fuel flowrate supplied to the burners 18, or may be closed, depending on design preferences. The contribution of the auxiliary fuel valve 23 is in any case less than the contribution of the main fuel valve 22, which may be designed and optimized for high-load operation.

For load setpoints in the second load range LR2, from the threshold partial load LTH to minimum load LM, the controller 10 adjusts the auxiliary fuel valve 23. Outside the first load range LR1, the main fuel valve 22 is closed by the controller 10, so that control at very low partial load is left to the auxiliary fuel valve 23, which may be specifically designed for this purpose.

In one embodiment, the first load range LR1 and the second load range LR2 may overlap in a subrange SR including the threshold partial load LTH (figures 3A and 3B). In the subrange SR, both the main fuel valve 22 and the auxiliary fuel valve 23 may be used by the controller 10 for the purpose of flowrate control.

The controller 10 is further configured to deactivate at least a threshold number of burners 18 before starting using the auxiliary fuel valve 23. In the example of figure 4, M = 24 is the total number of burners 18 and NTH = 20 is the threshold number and K = M - NTH = 4 is the number of the burners 18 maintained active at the time the controller 10 starts using the auxiliary fuel valve 23. The number of active burners 18 may be further reduced to reach still lower load conditions.

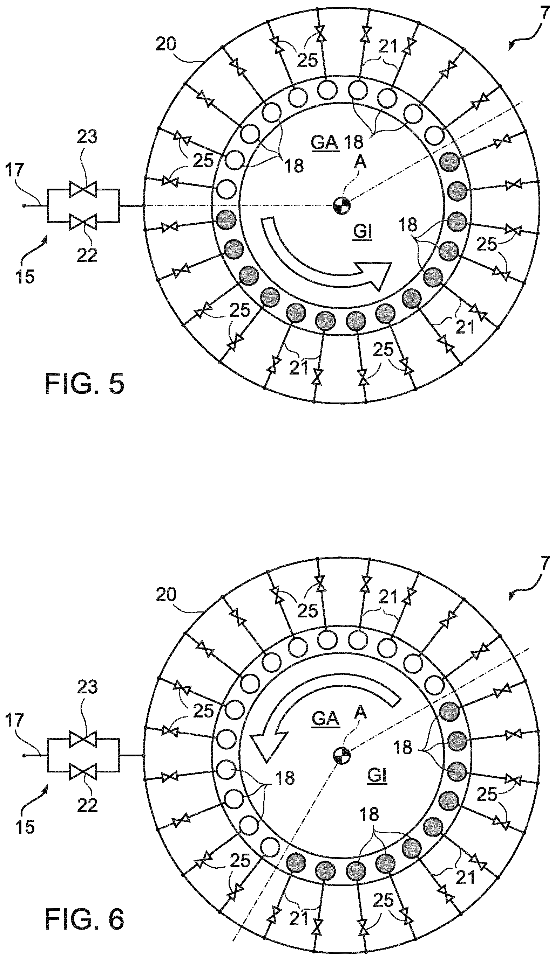

Activation and deactivation of the burners 18 is accomplished by the controller 10 through the shut-off valves 25, which can be individually and independently operated. The controller 10 is configured to activate and deactivate the burners so that, in any operation condition and independently of the number of active burners 18, the active burners 18 form a single group of adjacent active burners 18 and the inactive burners 18 form a single group of adjacent inactive burners 18. This is to be understood as meaning that all the burners 18 of the single group are adjacent only to other active burners 18, except two burners 18 at opposite ends of the single group, which are adjacent to one active burner 18 and to one inactive burner 18. When all the burners 18 are active, the controller 10 initially deactivates a first one of the burners 18 and then deactivates in succession active burners 18 which are adjacent to an inactive burner 18, as illustrated by way of example in figure 5. Accordingly, all active burners 18 are adjacent to one another and form a single group of active burners GA and all the inactive burners 18 are adjacent to one another and form a single group of inactive burners GI.

Likewise, after at least one burner 18 has been initially activated from a shut-off condition of the whole second-stage combustor 7, the controller 10 sequentially activates inactive burners 18 which are adjacent to an active burner 18, as shown in figure 6. The burner 18 are at any time divided into the single group of active burners GA and the single group of inactive burners GI, although the composition of each one of the single group of active burners GA and the single group of inactive burners GI changes during operation.

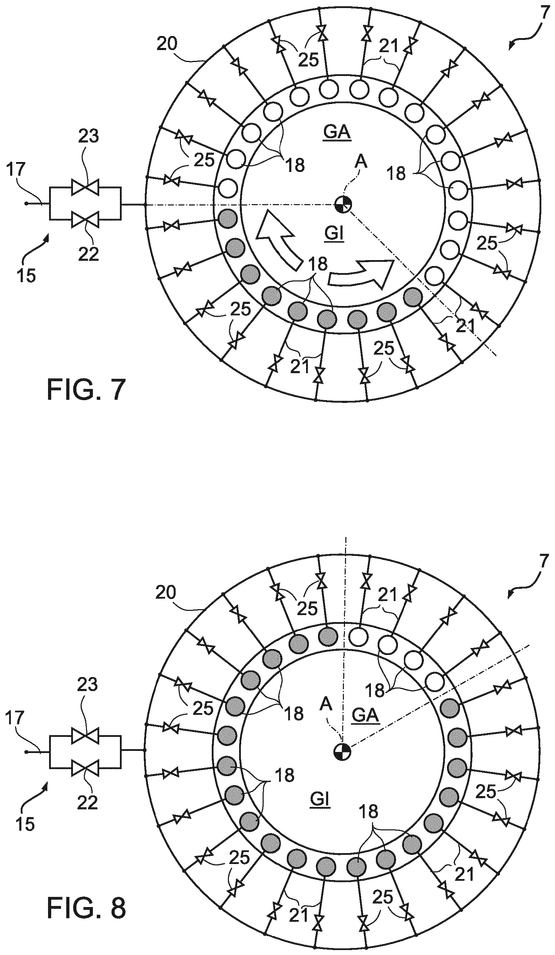

Activation and deactivation of the burners 18 may follow any pattern, in principle, provided that all active burners 18 are adjacent to one another in the single group of active burners GA and all the inactive burners 18 are adjacent to one another in the single group of inactive burners GI at any time. By way of example, figures 7 and 8 show another possible pattern of activation and deactivation of the burners 18. In this case, starting from a burner 18 deactivated first, the other burners 18 are alternately deactivated one in a clockwise direction and one in a counterclockwise direction, until the configuration of figure 8 is reached.

The controller 10 is also configured to modify the single group of active burners GA and the single group of inactive burners GI so that the active burners 18 vary not only during load transients, but also at steady partial load operation at least from time to time. In particular, the controller 10 is configured to control the burners 18 so that:
- the same number of adjacent burners 18 is maintained active in a first partial load condition and in a second partial load condition; and
- at least one of the burners 18 which are active in the first partial load condition is inactive in the second partial load condition and at least one of the burners 18 which are inactive in the first partial load condition is active in the second partial load condition.

The first partial load condition and the second partial load condition may include, respectively, a load setpoint within a low load range during a first time interval and the load setpoint within the low load range during a second time interval, distinct from the first time interval.

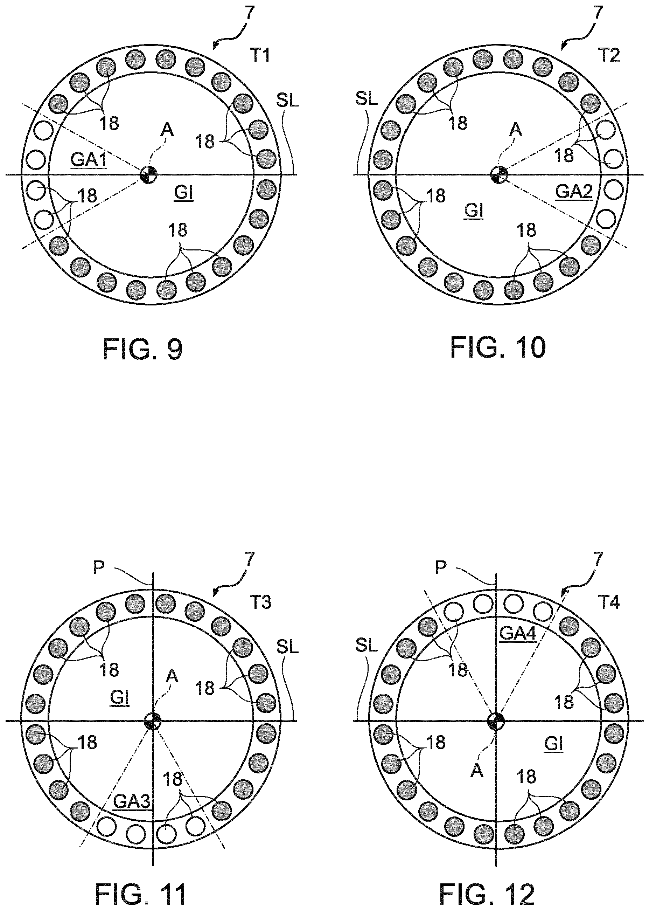

In one embodiment, the controller 10 changes the activation pattern of the burners 18 at every load cycle. For example, in one load cycle (T1, figure 9) a first single group of active burners GA1 is selected and comprises burners 18 symmetrically arranged with respect to a split plane SL on a first side of the gas turbine engine 1. In a second subsequent load cycle (T2, figure 10), a second single group of active burners GA2 is selected and comprises burners 18 symmetrically arranged with respect to the split plane SL on a second side of the gas turbine engine 1, opposite to the first side. In practice, the burners 18 active in the second load cycle are symmetrically opposite to the burners 18 active in the first load cycle. Then, in a third load cycle (T3, figure 11), a third single group of active burners GA3 is selected and comprises burners 18 symmetrically arranged with respect to a plane P perpendicular to the split plane SL at the bottom of the gas turbine engine 1. In a fourth load cycle (T4, figure 12), a fourth single group of active burners GA4 is selected and comprises burners 18 symmetrically arranged with respect to the plane P perpendicular to the split plane SL at the top of the gas turbine engine 1, opposite to the burners 18 active during the third load cycle.

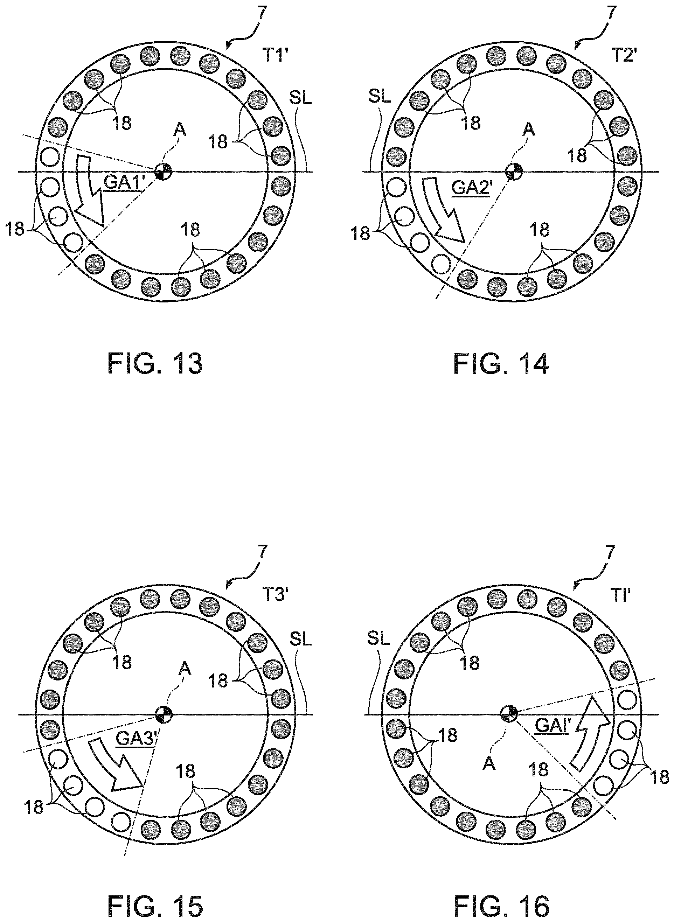

In another embodiment, illustrated in figures 13-16, the controller 10 changes the pattern of active burners 18 during each load cycle. In a first time interval T1' at the beginning of the load cycle (figure 13), a first single group of active burners GA1' is initially selected. Once the first time interval T1' has lapsed, the active burner 18 at one end of the first single group of active burners GA1' is deactivated and the inactive burner 18 adjacent to the opposite end of the first single group of active burners GA1' is activated. Accordingly, a second single group of active burners GA2' is obtained (figure 14), which is rotated e.g. counterclockwise and is maintained during a second time interval T2'. Likewise, in a subsequent third time interval T3' (figure 15) the controller 10 deactivates the active burner 18 at one end of the second single group of active burners GA2' and activates the inactive burner 18 adjacent to the opposite end of the second single group of active burners GA2', thus obtaining a third single group of active burners GA3' and rotating the pattern of active burners 18 of another step in the same direction, here counterclockwise. The controller 10 iteratively repeats the process of deactivating the active burner 18 at one end of the current single group of active burners and activating the inactive burner 18 adjacent to the opposite end of the current single group of active burners, thereby obtaining stepwise rotations in the same direction of the pattern of active burners single group of active burners. Figure 16 shows a I-th single group of active burners GAI' rotated of I steps during a I-th time interval TI'. The controller 10 may also deactivate more than one active burners 18 at one end of the current single group of active burners and activate more than one inactive burners 18 adjacent to the opposite end of the current single group of active burners. For example, the controller may deactivate and activate two or three burners at a time, thus obtaining rotations of two or three steps, respectively, of the single group of active burners 18.

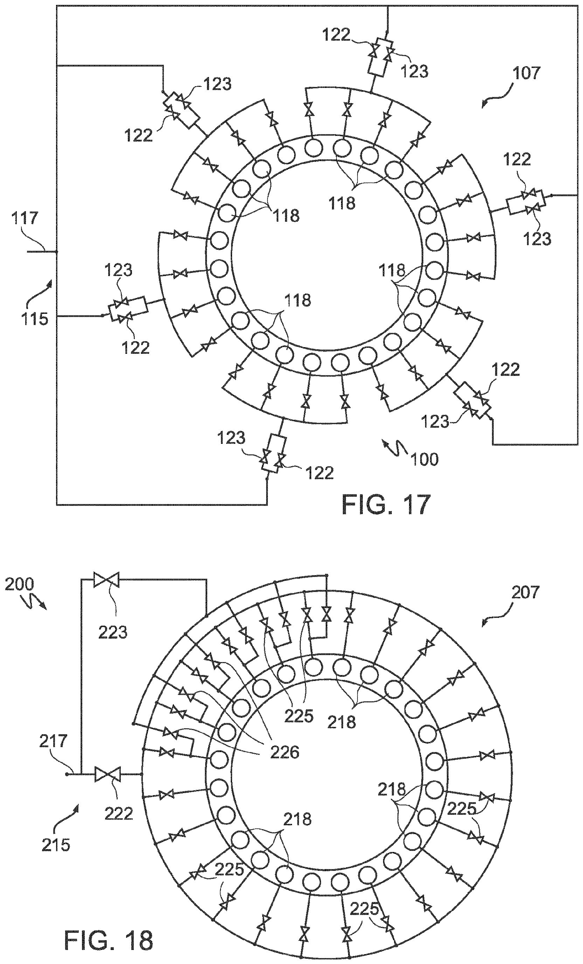

In the embodiment illustrated in figure 17, a gas turbine engine 100 comprises a combustor 107 and a fuel valve system 115 configured to feed the combustor 107 from a fuel supply line 117. The combustor 107 may be a single-stage combustor system, as well as a first-stage combustor or a second stage combustor of a two-stage (or sequential) combustor system. The fuel valve system 115 comprises a plurality of main fuel valves 122 and a plurality of auxiliary fuel valves 123. Each main fuel valve 122 and each auxiliary fuel valve 123 are fluidly coupled between the fuel supply line 117 and a group of respective associated burners 118. More specifically, each group of burners 118 is served by a respective main fuel valve 122 and a respective auxiliary fuel valve 123, which are connected in parallel between the fuel supply line 117 and inlets of the burners 118.

Figure 18 shows another embodiment of a gas turbine engine, here designated by 200 and comprising a combustor 207 and a fuel valve system 215 configured to feed the combustor 207 from a fuel supply line 217. The fuel valve system 215 comprises a main fuel valve 222 and an auxiliary fuel valve 223, which are fluidly coupled between the fuel supply line 217 and a group G of burners 218. Inlets of the burners 218 of the group G are connected to outlets of the main fuel valve 122 through respective main shut-off valves 225 and to outlets of the auxiliary fuel valve 223 through respective auxiliary shut off-valves 226.

Advantages of the invention are apparent from the exemplary embodiments described above.

Use of an auxiliary fuel valve dedicated to fuel control at low partial load allows very precise fuel supply over a broad range of operating conditions. The auxiliary fuel valve may in fact be selected for the low partial load range, so the gas turbine engine does not suffer from problems which affect the known combustors and derive from the need to operate the fuel supply valves at opposite ends of a broad range. According to the proposed solution, the main fuel valve is used for full load and high partial load down to a threshold load, which may be conveniently selected to avoid flame instability and critical combustion conditions. Then, the main fuel valve may be closed and fuel supply control is accomplished through the auxiliary fuel valve in a low partial load range, below the threshold load. Fuel supply control is very precise, because the auxiliary fuel valve need not be operated over a broad range. As a result, the overall load range of the gas turbine engine may be advantageously extended to very low partial load without affecting flame stability and high-quality combustion and without exceeding limits set to pollutant emission, especially carbon monoxide. Partial load as low as around 10% of the base load can be reached.

The main fuel valve and the auxiliary fuel valve may be independently selected by the controller to optimize performance in respective flowrate ranges that yield corresponding load ranges.

The overlap in the subrange allows smooth transition between higher partial load range and lower partial load range, thus preventing possible causes of instability.

Individual and independent activation and deactivation of the burners allows to flexibly select strategies for transitions from full load to low partial load operating condition and the pattern of active burners at any partial load.

Tests at low partial loads revealed that the production of carbon monoxide is affected by the number of hot/cold interfaces, i.e. of active burners adjacent to inactive burners. Namely, the higher the number of hot/cold interfaces, the greater the production of carbon monoxide. Controlling activation and deactivation of the burners so that, in any operation condition, the active burners form a single group of adjacent active burners and the inactive burners form a single group of adjacent inactive burners leads to minimization of the hot/cold interfaces (two). Also production of carbon monoxide can be thus minimized.

Deactivating initially a first burner, when all the burners are active, and then deactivating in succession active burners adjacent to an inactive burner ensures that the number of the hot/cold interfaces is always kept minimum at two.

Alternating different patterns of active burners avoids that, at low partial load, some burners are always in use and other burners are always shut-off. Even at partial load, components downstream of the active burners are subjected to thermal and mechanical stress, that affects lifetime of the components. Since the compositions of the single group of active burners is frequently modified, ageing is substantially uniform and early exchange of the components in the hot zones is prevented. Average lifetime is thus increased and compliance with limits of pollutant emissions, especially carbon monoxide, is not affected. Strategies for change of the alternating patterns may be flexibly chosen in accordance with design preferences.

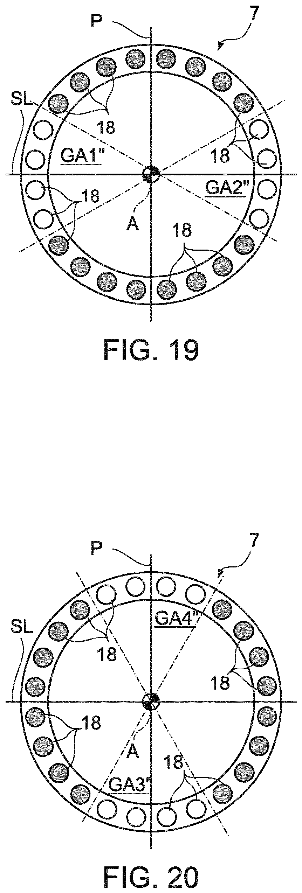

Even though keeping all active burners adjacent to one another is beneficial to low carbon monoxide emissions, modifying the pattern of active burners is still advantageous in terms of extended lifetime of the components and less frequent maintenance, even in case active burners form two or more groups. In the embodiment of figures 19 and 20, for example, the controller 10 at low partial load maintains two separate groups of burners 18 in the active state in two different configurations. The same number of burners 18 are active in both configurations and the same level of power output can be provided. However, individual burners 18 forming the two groups change over time. In a first partial load condition two first groups GA1", GA2" of burners 18 are active. For example, the two first groups GA1", GA2" may include burners 18 symmetrically arranged across the split plane SL and with respect to the machine axis A, at opposite sides of the gas turbine engine 1. In a second partial load condition, the controller 10 activates two second groups GA3", GA4" of burners 18, distinct from the two firsts groups GA1", GA2". For example, the two second groups GA3", GA4" may include burners 18 symmetrically arranged across a plane P perpendicular to the split plane SL and with respect to the machine axis A, at the top and at the bottom gas turbine engine 1. Hence, the configuration of the burners 18 in the second partial load condition is rotated of 90° with respect to the configuration in the first partial load condition. Advantageously, burners 18 in each of the groups GA1", GA2", GA3", GA4" are adjacent to one another.

Finally, it is evident that the described second-stage combustor and method of controlling a sequential combustor may be subject to modifications and variations, without departing from the scope of the present invention, as defined in the appended claims.

In particular, the invention indifferently applies to gas turbine engines with single-stage combustor assemblies and two-stage or sequential combustor assemblies and, in the latter case, indifferently to the first-stage combustor and to the second-stage combustor. Moreover, the invention may be exploited for annular, can-annular and can combustor as required according to design preferences. High-pressure and low-pressure turbines or a single turbine may be present.

Groups of four active burners have been illustrated in the examples described. It is understood that the groups may include any suitable number of burners in accordance with design preferences.

## Claims

1. A gas turbine engine, comprising:
a combustor assembly (7; 107; 207), having a plurality of burners (18; 118; 218) circumferentially arranged about an axis (A);
a fuel supply system (9), configured to supply a fuel flowrate (M2) to the burners (18; 118; 218); and
a controller (10), configured to control the fuel flowrate (M2);
**characterised in that** the controller (10) is further configured to activate and deactivate each burner (18; 118; 218) so that:
an equal number of adjacent burners (18; 118; 218) is maintained active in a first partial load condition and in a second partial load condition; and
at least one of the burners (18; 118; 218) which are active in the first partial load condition is deactivated in the second partial load condition and at least one of the burners (18; 118; 218) which are inactive in the first partial load condition is activated in the second partial load condition.

2. The gas turbine engine according to claim 1, wherein the first partial load condition and the second partial load condition include, respectively, a load setpoint within a low load range during a first time interval and the load setpoint within the low load range during a second time interval, distinct from the first time interval.

3. The gas turbine engine according to claim 1 or 2, wherein the controller (10) is configured to change an activation pattern of the burners (18) at every load cycle and/or during each load cycle.

4. The gas turbine engine according to any one of the preceding claims, wherein the controller (10) is configured to activate and deactivate each burner (18; 118; 218) so that, in any operation condition in which at least one of the burners (18; 118; 218) is inactive, the active burners (18; 118; 218) form a single group of adjacent active burners (GA; GA1-GA4; GA1'-GAI') and the inactive burners (18; 118; 218) form a single group of adjacent inactive burners (GI).

5. The gas turbine engine according to claim 4, wherein the controller (10) is configured to select a first single group of active burners (GA1) in a first load cycle (T1) at partial load and a second single group of active burners (GA2) in a second subsequent load cycle (T2) at partial load, the burners (18) of the first single group of active burners (GA1) being arranged opposite to the burners (18) of the second single group of active burners (GA2).

6. The gas turbine engine according to claim 5, wherein the first single group of active burners (GA1) and the second single group of active burners (GA2) comprise burners (18) symmetrically arranged with respect to a first plane (SL) on a first side and on a second side the gas turbine engine (1), respectively.

7. The gas turbine engine according to claim 6, wherein the controller (10) is configured to select a third single group of active burners (GA3) in a third load cycle (T3) at partial load and a fourth single group of active burners (GA4) in a fourth load cycle (T4) at partial load, the burners (18) of the third single group of active burners (GA3) being arranged opposite to the burners (18) of the fourth single group of active burners (GA4).

8. The gas turbine engine according to claim 7, wherein the third single group of active burners (GA3) and the fourth single group of active burners (GA4) comprise burners (18) symmetrically arranged with respect to a second plane (P) perpendicular to the first plane (SL) on a third side and on a fourth side the gas turbine engine (1), respectively.

9. The gas turbine engine according to claim 4, wherein the controller (10) is configured to:
select a first single group of active burners (GA1') in a first time interval (T1') at the beginning of a load cycle;
once the first time interval (T1) has lapsed, deactivate at least one of the active burners (18) at one end of the first single group of active burners (GA1) and activate at least one of the inactive burners (18) adjacent to the opposite end of the first single group of active burners (GA1'), thereby obtaining a second single group of active burners (GA2'), which is rotated with respect to the first single group of active burners (GA1') and is maintained during a second time interval (T2').

10. The gas turbine engine according to claim 9, wherein the controller (10) is configured to iteratively repeat deactivating at least one of the active burners (18) at one end of the current single group of active burners (GAI') and activating at least one of the inactive burners (18) adjacent to the opposite end of the current single group of active burners (GAI').

11. The gas turbine engine according to any one of the preceding claims, wherein the fuel supply system (9) comprises:
a fuel supply line (17; 117; 217) and a main fuel valve (22; 122; 222) between the fuel supply line (17; 117; 217) and the burners (18; 118; 218); and
an auxiliary fuel valve (23; 123; 223) fluidly coupled between the fuel supply line (17; 117; 217) and at least a group of associated burners (18; 118; 218);
and wherein the controller (10) is configured to control the fuel flowrate (M2) using the main fuel valve (22; 122; 222) in a first load range (LR1) from full load to a threshold partial load and using the auxiliary fuel valve (23; 123; 223) in a second load range (LR2) from the threshold partial load (LTH) to a minimum load (ML).

12. A method of controlling a gas turbine engine comprising a combustor assembly (7; 107; 207), having a plurality of burners (18; 118; 218) circumferentially arranged about an axis (A), the method comprising:
maintaining active an equal number of adjacent burners (18; 118; 218) in a first partial load condition and in a second partial load condition; and
in the second partial load condition, deactivating at least one of the burners (18; 118; 218) which are active in the first partial load condition and activating at least one of the burners (18; 118; 218) which are inactive in the first partial load condition.

13. The method according to claim 12, comprising changing an activation pattern of the burners (18) at every load cycle and/or during each load cycle.

14. The method according to claim 12 or 13, comprising activating and deactivating each burner (18; 118; 218) so that, in any operation condition in which at least one of the burners (18; 118; 218) is inactive, the active burners (18; 118; 218) form a single group of adjacent active burners (GA) and the inactive burners (18; 118; 218) form a single group of adjacent inactive burners (GI).

15. The method according to claim 14, comprising selecting a first single group of active burners (GA1) in a first load cycle (T1) at partial load and a second single group of active burners (GA2) in a second subsequent load cycle (T2) at partial load, the burners (18) of the first single group of active burners (GA1) being arranged opposite to the burners (18) of the second single group of active burners (GA2), preferably the first single group of active burners (GA1) and the second single group of active burners (GA2) comprising burners (18) symmetrically arranged with respect to a first plane (SL) on a first side and on a second side the gas turbine engine (1), respectively.

16. The method according to claim 14, comprising:
selecting a first single group of active burners (GA1') in a first time interval (T1') at the beginning of a load cycle;
once the first time interval (T1) has lapsed, deactivating at least one of the active burners (18) at one end of the first single group of active burners (GA1) and activating at least one of the inactive burners (18) adjacent to the opposite end of the first single group of active burners (GA1'), thereby obtaining a second single group of active burners (GA2'), which is rotated with respect to the first single group of active burners (GA1') and is maintained during a second time interval (T2'); and
iteratively repeating deactivating at least one of the active burners (18) at one end of the current single group of active burners (GAI') and activating at least one of the inactive burners (18) adjacent to the opposite end of the current single group of active burners (GAI').

## Patentansprüche

1. Gasturbinenmaschine, umfassend:
eine Brennkammeranordnung (7; 107; 207), die mehrere Brenner (18; 118; 218) aufweist, die in Umfangsrichtung um eine Achse (A) angeordnet sind:
ein Brennstoffzuführungssystem (9), das dazu konfiguriert ist, den Brennern (18; 118; 218) einen Brennstoffdurchsatz (M2) zuzuführen; und
eine Steuereinrichtung (10), die dazu konfiguriert ist, den Brennstoffdurchsatz (M2) zu steuern;
**dadurch gekennzeichnet, dass** die Steuereinrichtung (10) ferner dazu konfiguriert ist, jeden Brenner (18; 118; 218) zu aktivieren und zu deaktivieren, so dass:
eine gleiche Anzahl von benachbarten Brennern (18; 118; 218) in einem ersten Teillastzustand und in einem zweiten Teillastzustand aktiv gehalten wird; und
wenigstens einer der Brenner (18; 118; 218), die in dem ersten Teillastzustand aktiv sind, in dem zweiten Teillastzustand deaktiviert wird und wenigstens einer der Brenner (18; 118; 218), die in dem ersten Teillastzustand inaktiv sind, in dem zweiten Teillastzustand aktiviert wird.

2. Gasturbinenmaschine nach Anspruch 1, wobei der erste Teillastzustand und der zweite Teillastzustand jeweils einen Lastsollwert innerhalb eines Niedriglastbereichs während eines ersten Zeitintervalls und den Lastsollwert innerhalb des Niedriglastbereichs während eines zweiten Zeitintervalls, das sich von dem ersten Zeitintervall unterscheidet, umfassen.

3. Gasturbinenmaschine nach Anspruch 1 oder 2, wobei die Steuereinrichtung (10) dazu konfiguriert ist, ein Aktivierungsmuster der Brenner (18) bei jedem Lastzyklus und/oder während jedes Lastzyklus zu ändern.

4. Gasturbinenmaschine nach einem der vorangehenden Ansprüche, wobei die Steuereinrichtung (10) dazu konfiguriert ist, jeden Brenner (18; 118; 218) zu aktivieren und zu deaktivieren, so dass in jedem Betriebszustand, in dem wenigstens einer der Brenner (18; 118; 218) inaktiv ist, die aktiven Brenner (18; 118; 218) eine einzelne Gruppe benachbarter aktiver Brenner (GA; GA1-GA4; GA1'-GAI') bilden und die inaktiven Brenner (18; 118; 218) eine einzelne Gruppe benachbarter inaktiver Brenner (GI) bilden.

5. Gasturbinenmaschine nach Anspruch 4, wobei die Steuereinrichtung (10) dazu konfiguriert ist, eine erste einzelne Gruppe aktiver Brenner (GA1) in einem ersten Lastzyklus (T1) bei Teillast und eine zweite einzelne Gruppe aktiver Brenner (GA2) in einem zweiten nachfolgenden Lastzyklus (T2) bei Teillast auszuwählen, wobei die Brenner (18) der ersten einzelnen Gruppe aktiver Brenner (GA1) gegenüberliegend zu den Brennern (18) der zweiten einzelnen Gruppe aktiver Brenner (GA2) angeordnet sind.

6. Gasturbinenmaschine nach Anspruch 5, wobei die erste einzelne Gruppe aktiver Brenner (GA1) und die zweite einzelne Gruppe aktiver Brenner (GA2) Brenner (18) umfassen, die symmetrisch in Bezug auf eine erste Ebene (SL) auf einer ersten Seite bzw. auf einer zweiten Seite der Gasturbinenmaschine (1) angeordnet sind.

7. Gasturbinenmaschine nach Anspruch 6, wobei die Steuereinrichtung (10) dazu konfiguriert ist, eine dritte einzelne Gruppe aktiver Brenner (GA3) in einem dritten Lastzyklus (T3) bei Teillast und eine vierte einzelne Gruppe aktiver Brenner (GA4) in einem vierten Lastzyklus (T4) bei Teillast auszuwählen, wobei die Brenner (18) der dritten einzelnen Gruppe aktiver Brenner (GA3) gegenüberliegend zu den Brennern (18) der vierten einzelnen Gruppe aktiver Brenner (GA4) angeordnet sind.

8. Gasturbinenmaschine nach Anspruch 7, wobei die dritte einzelne Gruppe aktiver Brenner (GA3) und die vierte einzelne Gruppe aktiver Brenner (GA4) Brenner (18) umfassen, die symmetrisch in Bezug auf eine zweite Ebene (P) senkrecht zu der ersten Ebene (SL) auf einer dritten Seite bzw. auf einer vierten Seite der Gasturbinenmaschine (1) angeordnet sind.

9. Gasturbinenmaschine nach Anspruch 4, wobei die Steuereinrichtung (10) dazu konfiguriert ist:
eine erste einzelne Gruppe aktiver Brenner (GA1') in einem ersten Zeitintervall (T1') zu Beginn eines Lastzyklus auszuwählen;
nach Ablauf des ersten Zeitintervalls (T1) wenigstens einen der aktiven Brenner (18) an einem Ende der ersten einzelnen Gruppe aktiver Brenner (GA1) zu deaktivieren und wenigstens einen der inaktiven Brenner (18) neben dem gegenüberliegenden Ende der ersten einzelnen Gruppe aktiver Brenner (GA1') zu aktivieren, wodurch eine zweite einzelne Gruppe aktiver Brenner (GA2') erhalten wird, die in Bezug auf die erste einzelne Gruppe aktiver Brenner (GA1') rotiert ist und während eines zweiten Zeitintervalls (T2') beibehalten wird.

10. Gasturbinenmaschine nach Anspruch 9, wobei die Steuereinrichtung (10) dazu konfiguriert ist, das Deaktivieren wenigstens eines der aktiven Brenner (18) an einem Ende der aktuellen einzelnen Gruppe aktiver Brenner (GAI') und das Aktivieren wenigstens eines der inaktiven Brenner (18) neben dem gegenüberliegenden Ende der aktuellen einzelnen Gruppe aktiver Brenner (GAI') iterativ zu wiederholen.

11. Gasturbinenmaschine nach einem der vorangehenden Ansprüche, wobei das Brennstoffzuführungssystem (9) umfasst:
eine Brennstoffzuführungsleitung (17; 117; 217) und ein Hauptbrennstoffventil (22; 122; 222) zwischen der Brennstoffzuführungsleitung (17; 117; 217) und den Brennern (18; 118; 218); und
ein Hilfsbrennstoffventil (23; 123; 223), das strömungsmäßig zwischen der Brennstoffzuführungsleitung (17; 117; 217) und wenigstens einer Gruppe von zugehörigen Brennern (18; 118; 218) verbunden ist;
und wobei die Steuereinrichtung (10) dazu konfiguriert ist, den Brennstoffdurchsatz (M2) in einem ersten Lastbereich (LR1) von Volllast bis zu einer Schwellenwert-Teillast unter Verwendung des Hauptbrennstoffventils (22; 122; 222) zu steuern und in einem zweiten Lastbereich (LR2) von der Schwellenwert-Teillast (LTH) bis zu einer Mindestlast (ML) unter Verwendung des Hilfsbrennstoffventils (23; 123; 223) zu steuern.

12. Verfahren zum Steuern einer Gasturbinenmaschine mit einer Brennkammeranordnung (7; 107; 207), die mehrere Brenner (18; 118; 218) aufweist, die in Umfangsrichtung um eine Achse (A) angeordnet sind, wobei das Verfahren umfasst:
Aktivhalten einer gleichen Anzahl von benachbarten Brennern (18; 118; 218) in einem ersten Teillastzustand und in einem zweiten Teillastzustand; und
Deaktivieren wenigstens eines der Brenner (18; 118; 218), die in dem ersten Teillastzustand aktiv sind, und Aktivieren wenigstens eines der Brenner (18; 118; 218), die in dem ersten Teillastzustand inaktiv sind, in dem zweiten Teillastzustand.

13. Verfahren nach Anspruch 12, umfassend ein Ändern eines Aktivierungsmusters der Brenner (18) bei jedem Lastzyklus und/oder während jedes Lastzyklus.

14. Verfahren nach Anspruch 12 oder 13, umfassend ein Aktivieren und Deaktivieren jedes Brenners (18; 118; 218), so dass in jedem Betriebszustand, in dem wenigstens einer der Brenner (18; 118; 218) inaktiv ist, die aktiven Brenner (18; 118; 218) eine einzelne Gruppe benachbarter aktiver Brenner (GA) bilden und die inaktiven Brenner (18; 118; 218) eine einzelne Gruppe benachbarter inaktiver Brenner (GI) bilden.

15. Verfahren nach Anspruch 14, umfassend ein Auswählen einer ersten einzelnen Gruppe aktiver Brenner (GA1) in einem ersten Lastzyklus (T1) bei Teillast und einer zweiten einzelnen Gruppe aktiver Brenner (GA2) in einem zweiten nachfolgenden Lastzyklus (T2) bei Teillast, wobei die Brenner (18) der ersten einzelnen Gruppe aktiver Brenner (GA1) gegenüberliegend zu den Brennern (18) der zweiten einzelnen Gruppe aktiver Brenner (GA2) angeordnet sind, wobei vorzugsweise die erste einzelne Gruppe aktiver Brenner (GA1) und die zweite einzelne Gruppe aktiver Brenner (GA2) Brenner (18) umfassen, die symmetrisch in Bezug auf eine erste Ebene (SL) auf einer ersten Seite bzw. auf einer zweiten Seite der Gasturbinenmaschine (1) angeordnet sind.

16. Verfahren nach Anspruch 14, umfassend:
Auswählen einer ersten einzelnen Gruppe aktiver Brenner (GA1') in einem ersten Zeitintervall (T1') zu Beginn eines Lastzyklus;
Deaktivieren wenigstens eines der aktiven Brenner (18) an einem Ende der ersten einzelnen Gruppe aktiver Brenner (GA1) und Aktivieren wenigstens eines der inaktiven Brenner (18) neben dem gegenüberliegenden Ende der ersten einzelnen Gruppe aktiver Brenner (GA1'), nach Ablauf des ersten Zeitintervalls (Tl), wodurch eine zweite einzelne Gruppe aktiver Brenner (GA2') erhalten wird, die in Bezug auf die erste einzelne Gruppe aktiver Brenner (GA1') rotiert ist und während eines zweiten Zeitintervalls (T2') beibehalten wird; und
iteratives Wiederholen des Deaktivierens wenigstens eines der aktiven Brenner (18) an einem Ende der aktuellen einzelnen Gruppe aktiver Brenner (GAI') und Aktivieren wenigstens eines der inaktiven Brenner (18) neben dem gegenüberliegenden Ende der aktuellen einzelnen Gruppe aktiver Brenner (GAI').

## Revendications

1. Moteur à turbine à gaz, comprenant :
un ensemble chambre de combustion (7 ; 107 ; 207), comportant une pluralité de brûleurs (18 ; 118 ; 218) disposés circonférentiellement autour d'un axe (A) ;
d'un système d'alimentation en carburant (9), conçu pour fournir un débit de carburant (M2) aux brûleurs (18 ; 118 ; 218) ; et
d'un dispositif de commande (10), conçu pour commander le débit de carburant (M2) ;
**caractérisé en ce que** le dispositif de commande (10) est en outre conçu pour activer et désactiver chaque brûleur (18 ; 118 ; 218) de sorte que :
un nombre égal de brûleurs adjacents (18 ; 118 ; 218) est maintenu actif dans un premier état de charge partielle et dans un second état de charge partielle ; et
au moins l'un des brûleurs (18 ; 118 ; 218), qui sont actifs dans le premier état de charge partielle, est désactivé dans le second état de charge partielle et au moins l'un des brûleurs (18 ; 118 ; 218), qui sont inactifs dans le premier état de charge partielle, est activé dans le second état de charge partielle.

2. Moteur à turbine à gaz selon la revendication 1, dans lequel le premier état de charge partielle et le second état de charge partielle comprennent, respectivement, un point de consigne de charge dans une plage de faible charge pendant un premier intervalle de temps et le point de consigne de charge dans la plage de faible charge pendant un second intervalle de temps, distinct du premier intervalle de temps.

3. Moteur à turbine à gaz selon la revendication 1 ou 2, dans lequel le dispositif de commande (10) est conçu pour changer un modèle d'activation des brûleurs (18) à chaque cycle de charge et/ou pendant chaque cycle de charge.

4. Moteur à turbine à gaz selon l'une quelconque des revendications précédentes, dans lequel le dispositif de commande (10) est conçu pour activer et désactiver chaque brûleur (18; 118; 218) de sorte que, dans tout état de fonctionnement dans lequel au moins l'un des brûleurs (18 ; 118 ; 218) est inactif, les brûleurs actifs (18 ; 118 ; 218) forment un groupe unique de brûleurs actifs adjacents (GA ; GA1 à GA4 ; GA1' à GAI') et les brûleurs inactifs (18 ; 118 ; 218) forment un groupe unique de brûleurs inactifs adjacents (GI).

5. Moteur à turbine à gaz selon la revendication 4, dans lequel le dispositif de commande (10) est conçu pour sélectionner un premier groupe unique de brûleurs actifs (GA1) dans un premier cycle de charge (T1) à charge partielle et un deuxième groupe unique de brûleurs actifs (GA2) dans un deuxième cycle de charge suivant (T2) à charge partielle, les brûleurs (18) du premier groupe unique de brûleurs actifs (GA1) étant disposés à l'opposé des brûleurs (18) du deuxième groupe unique de brûleurs actifs (GA2).

6. Moteur à turbine à gaz selon la revendication 5, dans lequel le premier groupe unique de brûleurs actifs (GA1) et le deuxième groupe unique de brûleurs actifs (GA2) comprennent des brûleurs (18) disposés symétriquement par rapport à un premier plan (SL) sur un premier côté et sur un deuxième côté du moteur à turbine à gaz (1), respectivement.

7. Moteur à turbine à gaz selon la revendication 6, dans lequel le dispositif de commande (10) est conçu pour sélectionner un troisième groupe unique de brûleurs actifs (GA3) dans un troisième cycle de charge (T3) à charge partielle et un quatrième groupe unique de brûleurs actifs (GA4) dans un quatrième cycle de charge (T4) à charge partielle, les brûleurs (18) du troisième groupe unique de brûleurs actifs (GA3) étant disposés à l'opposé des brûleurs (18) du quatrième groupe unique de brûleurs actifs (GA4).

8. Moteur à turbine à gaz selon la revendication 7, dans lequel le troisième groupe unique de brûleurs actifs (GA3) et le quatrième groupe unique de brûleurs actifs (GA4) comprennent des brûleurs (18) disposés symétriquement par rapport à un second plan (P) perpendiculaire au premier plan (SL) sur un troisième côté et sur un quatrième côté du moteur à turbine à gaz (1), respectivement.

9. Moteur à turbine à gaz selon la revendication 4, dans lequel le dispositif de commande (10) est conçu pour :
sélectionner un premier groupe unique de brûleurs actifs (GA1') dans un premier intervalle de temps (T1') au début d'un cycle de charge ;
une fois que le premier intervalle de temps (T1) s'est écoulé, désactiver au moins l'un des brûleurs actifs (18) à une extrémité du premier groupe unique de brûleurs actifs (GA1) et activer au moins l'un des brûleurs inactifs (18) adjacents à l'extrémité opposée du premier groupe unique de brûleurs actifs (GA1'), obtenant ainsi un deuxième groupe unique de brûleurs actifs (GA2'), qui tourne par rapport au premier groupe unique de brûleurs actifs (GA1') et qui est maintenu pendant un second intervalle de temps (T2').

10. Moteur à turbine à gaz selon la revendication 9, dans lequel le dispositif de commande (10) est conçu pour répéter de manière itérative la désactivation d'au moins l'un des brûleurs actifs (18) à une extrémité du groupe unique actuel de brûleurs actifs (GAI') et l'activation d'au moins l'un des brûleurs inactifs (18) adjacents à l'extrémité opposée du groupe unique actuel de brûleurs actifs (GAI').

11. Moteur à turbine à gaz selon l'une quelconque des revendications précédentes, dans lequel le système d'alimentation en carburant (9) comprend :
une conduite d'alimentation en carburant (17 ; 117 ; 217) et une vanne de carburant principale (22 ; 122 ; 222) entre la conduite d'alimentation en carburant (17 ; 117; 217) et les brûleurs (18; 118; 218) ; et
une vanne de carburant auxiliaire (23 ; 123 ; 223) couplée de manière fluidique entre la conduite d'alimentation en carburant (17 ; 117 ; 217) et au moins un groupe de brûleurs associés (18 ; 118 ; 218) ;
et dans lequel le dispositif de commande (10) est conçu pour commander le débit de carburant (M2), au moyen de la vanne de carburant principale (22 ; 122 ; 222), dans une première plage de charge (LR1) allant de la pleine charge à une charge partielle de seuil et, au moyen de la vanne de carburant auxiliaire (23 ; 123 ; 223), dans une seconde plage de charge (LR2) allant de la charge partielle de seuil (LTH) à une charge minimale (ML).

12. Procédé de commande d'un moteur à turbine à gaz comprenant un ensemble chambre de combustion (7 ; 107 ; 207), ayant une pluralité de brûleurs (18 ; 118 ; 218) disposés circonférentiellement autour d'un axe (A), le procédé comprenant :
le maintien actifs d'un nombre égal de brûleurs adjacents (18 ; 118 ; 218) dans un premier état de charge partielle et dans un second état de charge partielle ; et
dans le second état de charge partielle, la désactivation d'au moins l'un des brûleurs (18 ; 118 ; 218) qui sont actifs dans le premier état de charge partielle et l'activation d'au moins l'un des brûleurs (18 ; 118 ; 218) qui sont inactifs dans le premier état de charge partielle.

13. Procédé selon la revendication 12, comprenant le changement d'un modèle d'activation des brûleurs (18) à chaque cycle de charge et/ou pendant chaque cycle de charge.

14. Procédé selon la revendication 12 ou 13, comprenant l'activation et la désactivation de chaque brûleur (18; 118; 218) de sorte que, dans tout état de fonctionnement dans lequel au moins l'un des brûleurs (18 ; 118 ; 218) est inactif, les brûleurs actifs (18 ; 118 ; 218) forment un groupe unique de brûleurs actifs adjacents (GA) et les brûleurs inactifs (18 ; 118 ; 218) forment un groupe unique de brûleurs inactifs adjacents (GI).

15. Procédé selon la revendication 14, comprenant la sélection d'un premier groupe unique de brûleurs actifs (GA1) dans un premier cycle de charge (T1) à charge partielle et d'un deuxième groupe unique de brûleurs actifs (GA2) dans un deuxième cycle de charge suivant (T2) à charge partielle, les brûleurs (18) du premier groupe unique de brûleurs actifs (GA1) étant disposés à l'opposé des brûleurs (18) du deuxième groupe unique de brûleurs actifs (GA2), de préférence le premier groupe unique de brûleurs actifs (GA1) et le deuxième groupe unique de brûleurs actifs (GA2) comprennent des brûleurs (18) disposés symétriquement par rapport à un premier plan (SL) sur un premier côté et sur un deuxième côté du moteur à turbine à gaz (1), respectivement.

16. Procédé selon la revendication 14, comprenant :
la sélection d'un premier groupe unique de brûleurs actifs (GA1') dans un premier intervalle de temps (T1') au début d'un cycle de charge ;
une fois que le premier intervalle de temps (T1) s'est écoulé, la désactivation d'au moins l'un des brûleurs actifs (18) à une extrémité du premier groupe unique de brûleurs actifs (GA1) et l'activation d'au moins l'un des brûleurs inactifs (18) adjacents à l'extrémité opposée du premier groupe unique de brûleurs actifs (GA1 '), obtenant ainsi un deuxième groupe unique de brûleurs actifs (GA2'), qui tourne par rapport au premier groupe unique de brûleurs actifs (GA1 ') et qui est maintenu pendant un second intervalle de temps (T2') ; et
la répétition itérative de la désactivation d'au moins l'un des brûleurs actifs (18) à une extrémité du groupe unique actuel de brûleurs actifs (GAI') et l'activation d'au moins l'un des brûleurs inactifs (18) adjacents à l'extrémité opposée du groupe unique actuel de brûleurs actifs (GAI').
